(19) Europäisches Patentamt
European Patent Office
Office européen des brevets

(11) **EP 0 507 102 B1**

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(51) Int Cl.6: **G01C 9/06**, G01C 9/20

(21) Anmeldenummer: **92103844.4**

(22) Anmeldetag: **06.03.1992**

(54) **Zweiachsiger Neigungsmesser**

Two-axis inclinometer

Inclinomètre à deux axes

(84) Benannte Vertragsstaaten:
**CH DE FR GB LI SE**

(30) Priorität: **04.04.1991 DE 4110858**

(43) Veröffentlichungstag der Anmeldung:
**07.10.1992 Patentblatt 1992/41**

(73) Patentinhaber: **Leica AG**
**CH-9435 Heerbrugg (CH)**

(72) Erfinder: **Piske, Wilfried**
**CH-9435 Heerbrugg (CH)**

(56) Entgegenhaltungen:
EP-A- 0 303 352        EP-A- 0 335 117
CH-A- 507 506          DE-A- 3 634 244

- **PATENT ABSTRACTS OF JAPAN vol. 8, no. 38 (P-255)(1475) 18. Februar 1984 & JP-A-58 190 710 (MITSUBISHI) 7. NOVEMBER 1983**

Printed by Jouve, 75001 PARIS (FR)

## Beschreibung

Die Erfindung betrifft einen zweiachsigen Neigungsmesser gemäß dem Oberbegriff des Patentanspruchs 1.

Derartige Neigungsmesser werden beispielsweise in der Geodäsie zur Horizontierung von geodätischen Meßinstrumenten verwendet. Bei derartigen Neigungsmessem ist ein Element vorgesehen, welches seine Lage in Abhängigkeit von der Schwerkraft verändert. Über dieses Element wird eine Meßmarke auf einen lagestabilen Empfänger abgebildet. Eine sich hier ergebende Lageabweichung zu einem vorher justierten Nullpunkt ist ein Maß für die Neigung des Gerätes.

Ein derartiger Neigungsmesser ist aus der EP 0 161 207 B1 bekannt. Mit einer Spaltbeleuchtung wird über einen Spiegel ein Lichtbündel auf ein kombiniertes Glas-Flüssigkeitsprisma projiziert. Das Prisma weist einen mit Siliconöl gefüllten Behälter auf, wobei über eine Reflexion am Flüssigkeitshorizont und Projektion des Strahls auf ein lichtempfindliches Array die Neigung ermittelt wird. Mit der hier beschriebenen und dargestellten Spaltbeleuchtung kann nur eine einachsige Neigungsrichtung bei eingeschränktem Meßbereich ermittelt werden. Insbesondere bei geodätischen Instrumenten sind jedoch zweiachsige Neigungsmessungen erforderlich.

In der EP-A- 0 335 117 wird eine Vorrichtung zum Feststellen von Lageänderungen bezüglich einer vertikalen Bezugsrichtung in Bauwerken oder im Baugrund beschrieben, bei der eine Laserlichtquelle an einem Lotdraht befestigt ist und über eine Mattscheibe eine Detektoranordnung beleuchtet. Die Laserlichtquelle ist in einem Gehäuse angeordnet, welches Dämpfungsglieder aufweist, die in eine Dämpfungsflüssigkeit eingetaucht sind. Hier wird nur das Lichtquellenbild auf die Detektoranordnung übertragen. Geometrische Figuren werden nicht projiziert.

In der DE - A - 3 634 244 wird ein optoelektronischer Neigungssensor mit einer Lichtquelle, einem mit einer Flüssigkeit gefüllten Behälter und einer 4- Quadranten - Fotodiode beschrieben. Mit der Lichtquelle wird ein Lichtstrahl durch die Flüssigkeit auf die Fotodiode projiziert. In der Null-Lage werden die einzelnen Fotodioden gleichmäßig mit Licht beaufschlagt. Bei einer Neigung des Gerätes wird der Lichtstrahl gebrochen bzw. abgelenkt und die einzelnen Fotodioden werden ungleichmäßig mit Licht beaufschlagt. Über die ungleichmäßigen Lichtverteilungen lassen sich Aussagen über eine Neigungsänderung treffen. Eine genaue und betragsmäßig erfassbare Neigungsmessung ist mit dieser Vorrichtung nicht möglich.

Aus der CH-A- 507 506 ist ein Pendelmessgerät mit zwei, jeweils ein Raster tragendes Pendel bekannt. Über eine Lichtquelle werden die Raster durchleuchtet und das durchgehende Licht von zwei Fotodioden empfangen. Durch Lageveränderungen werden die beiden Raster gegeneinander verschoben und somit der transmittierte Lichtfluß verändert.

Die EP-A- 0 303 352 beschreibt ein Verfahren zur optischen Messung von Winkelbewegungen zwischen zwei mechanisch verbundenen Bauteilen. Mit einer Lichtquelle wird eine dreieckförmige Maske auf einen Spiegel projiziert und der Lichtstrahl von dort auf ein Array gelenkt. Der Spiegel ist an einem Kugelgelenk befestigt, welches die mechanische Verbindung zwischen den beiden Bauteilen herstellt. Nachteilig ist hier, daß die Messgenauigkeit entscheidend von der mechanischen Fertigungsgenauigkeit des Kugelgelenkes abhängig ist und zusätzlich nur ein eingeschränkte Meßbereich mit dem projizierten Muster realisiert werden kann.

Es ist Aufgabe der vorliegenden Erfindung, ausgehend vom bekannten Stand der Technik, einen Neigungsmesser derart weiterzubilden, daß zweiachsige Messungen bei hoher Meßgenauigkeit und großem Meßbereich ermöglicht werden.

Diese Aufgabe wird erfindungsgemäß durch die kennzeichnenden Merkmale des Patentanspruchs 1 gelöst. Vorteilhafte Weiterbildungen sind Gegenstand der abhängigen Ansprüche.

Die Erfindung ist in Ausführungsbeispielen dargestellt und wird anhand der schematischen Zeichnungen näher erläutert. Es zeigen:

die Fig. 1 eine Meßanordnung mit Flüssigkeitsprisma im Durchlicht,

die Fig. 2 einen Träger mit einer als Fischgrätmuster ausgebildeten geometrischen Figur,

die Fig. 3 ein Lineararray mit aufprojiziertem Winkel der geometrischen Figur,

die Fig. 4 eine Meßanordnung mit Flüssigkeitsprisma und Strahlenteiler,

die Fig. 5 eine Meßanordnung mit Flüssigkeitsprisma und Totalreflektion am Flüssigkeitshorizont,

die Fig. 6 eine Meßanordnung mit einem Fadenpendel,

die Fig. 7 einen Träger mit einer als Rautenmuster ausgebildeten geometrischen Figur,

die Fig. 8 einen Träger mit einer als Mäandermuster ausgebildeten geometrischen Figur,

die Fig. 9 einen Träger mit einer geometrischen Figur aus unterbrochenen Einzelwinkeln,

die Fig. 10      eine geneigte Meßanordnung mit Flüssigkeitsprisma im Durchlicht.

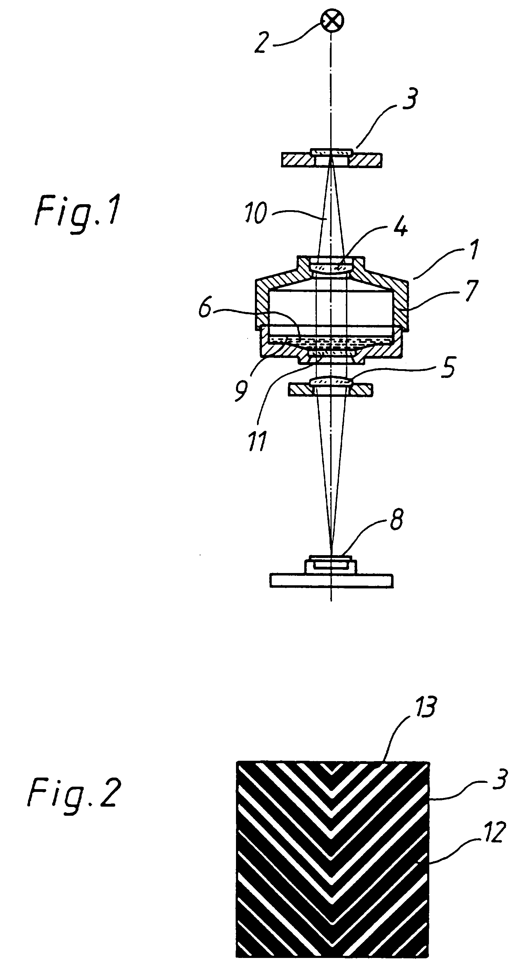

Die Figur 1 zeigt eine Anordnung für einen zweiachsigen Neigungsmesser mit einer Lichtquelle 2, von der ein Beleuchtungsstrahlenbündel 10 über einen Träger 3 und ein Flüssigkeitsprisma 1 hindurch abgebildet wird. Im Strahlengang sind Optiken 4 und 5 angeordnet. Das Flüssigkeitsprisma 1 weist in einem Behälter 7 eine Flüssigkeit 6 auf, die vorzugsweise aus transparentem Siliconöl besteht. Der Behälter 7 wird durch eine transparente Abschlußplatte 11 geschlossen. Mit den beiden Optiken 4, 5 wird ein auf dem Träger 3 vorgesehenes Muster 12; 17; 18 über die Flüssigkeit 6 auf ein Lineararray 8 abgebildet, wobei das Beleuchtungsstrahlenbündel 10 im Bereich der Flüssigkeit 6 parallel verläuft. Die hier beschriebene Anordnung kann sowohl in einem eigenen Gehäuse als auch als Bestandteil in einem geodätischen Meßinstrument angeordnet sein.

In dieser Ausführungsform erfolgt eine Ablenkung des Beleuchtungsstrahlenbündels 10 in X- und Y- Richtung durch Brechung am geneigten Flüssigkeitshorizont 9, wobei sich die Flüssigkeit 6 wie ein optischer Keil verhält.

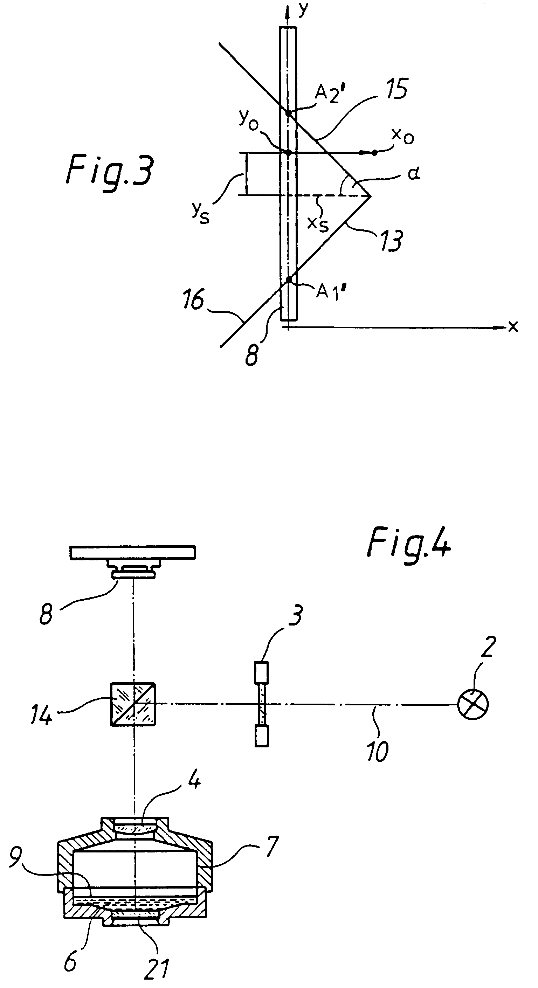

Die Figur 2 zeigt den Träger 3 mit einem darauf angeordneten Fischgrätmuster 12 aus einzelnen Winkeln 13, die in unterschiedlicher Strichstärke und in unregelmäßigem Abstand voneinander auf dem Träger 3 angeordnet sind. Durch diese codierte Anordnung wird ein größerer Meßbereich für die Neigungsmessung erreicht. Die Auswertung einer zweiachsigen Neigungsmessung mit einem 90° - Winkel wird an Hand der Figur 3 näher erläutert.

Die Figur 3 zeigt das Lineararray 8 mit einem einzelnen aufprojizierten Winkel 13 der geometrischen Figur. Die beiden Schenkel 15, 16 des Winkels 13 schneiden das Array 8 in jeweils einem Punkt $A_1'$, $A_2'$.

Als Normallage, d.h. für X und Y liegt keine Neigung vor, wurde die Spitze des Winkel 13 auf die Koordinaten $X_0$ und $Y_0$ justiert und rechnerisch ein X-Y-Koordinatensystem festgelegt.

Eine X-Y-Neigung wird aus der Lageabweichung der Spitze des Winkels 13 mit den nachfolgend aufgeführten Formeln ermittelt:

$$Y_s = \frac{A_1 + A_2}{2}$$

$$X_s = (A_2 - Y_s) * \text{ctg } \alpha = \frac{A_2 - A_1}{2} \text{ ctg } \alpha$$

Zur Auswertung einer Neigung in Y-Richtung verschiebt sich der Winkel 13 auf dem Array 8 entlang der Y-Achse und somit die Spitze des Winkels 13 parallel zum Array 8. Diese Verschiebung wird aus dem Betrag der Strecke $Y_s - Y_0$ bestimmt.

Zur Auswertung einer Neigung in X-Richtung verschiebt sich der Winkel 13 parallel zum Array 8 entlang der X-Achse und somit die Spitze des Winkels 13 senkrecht zum Array 8. Diese Verschiebung wird aus dem Betrag der Strecke $X_s - X_0$ bestimmt.

Bei einer sich überlagernden Bewegung, d.h. einer Neigung in X - und Y- Richtung, können die Beträge der beiden daraus resultierenden Verschiebungen auf dem Array 8 separat bestimmt werden.

Zur Vereinfachung der Berechnung kann der Winkel 13 mit 90° ausgebildet sein ( ctg 45° = 1 ). Die Meßempfindlichkeit kann jedoch auch durch die Wahl des Winkels verändert werden. Aus o.a. Formeln wird deutlich, daß bei einem Winkel $\alpha > 45°$ die Empfindlichkeit gegen eine X-Y-Verschiebung größer ist als bei $\alpha < 45°$. Durch die Verwendung einer geometrischen Figur, wie sie beispielsweise zur Figur 2 bereits beschrieben wurde, wird der Meßbereich erweitert und es können zur Fehlerkompensation mehrere Messungen gleichzeitig durchgeführt werden. Bedingt durch die unterschiedliche Strichstärke und/oder den unterschiedlichen Abstand der einzelnen Winkel 13 zueinander, kann jeder einzelne Winkel 13 an Hand dieser Codierung eindeutig erkannt und in einer nicht dargestellten Rechnereinheit ausgewertet werden.

Die Figur 4 zeigt ein weiteres Ausführungsbeispiel mit einem Teilerprisma 14. Über dieses Teilerprisma 14 wird das Strahlenbündel 10 umgelenkt und am Füssigkeitshorizont 9 gebrochen. Eine Reflexion des Bildes mit der geometrischen Figur erfolgt am Spiegel 21. Das reflektierte Bild wird über das Prisma 14 auf den Array 8 abgebildet.

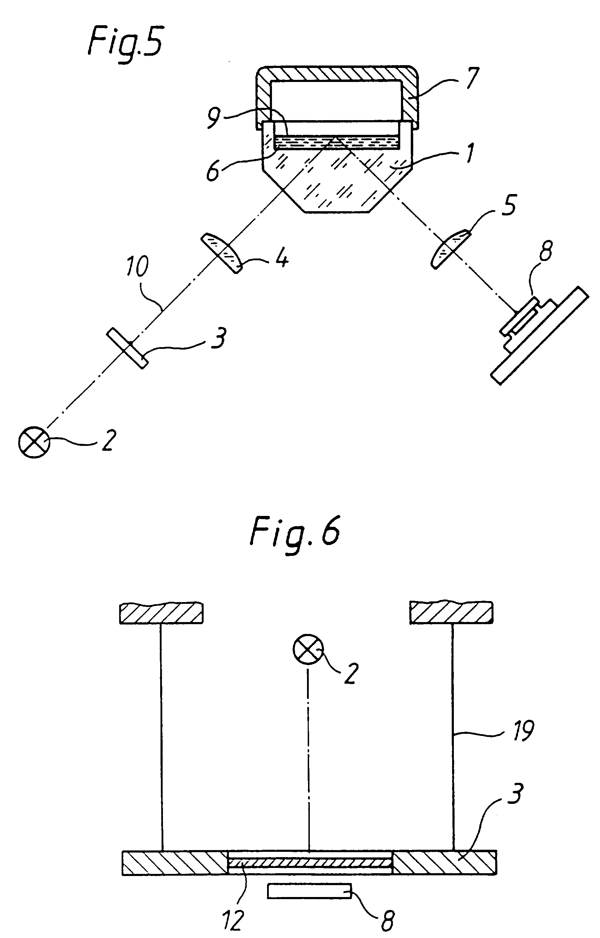

In der Figur 5 ist ein Ausführungsbeispiel mit einem kombinierten Glas-Flüssigkeitsprisma 1 dargestellt, welches sich dadurch auszeichnet, daß bei schräger Beleuchtung das auftreffende Beleuchtungsstrahlenbündel 10 am Flüssigkeitshorizont 9 gespiegelt wird und sich daraus auch bei geringen X-Y-Neigungen eine hohe Ablenkung der Beleuchtungsstrahlenbündels 10 erreichen läßt.

Die Figur 6 zeigt ein Ausführungsbeispiel der Anordnung mit einem Fadenpendel 19, an welchem der Träger 3 mit der geometrischen Struktur angeordnet ist. Der Träger 3 wird mit einer Lichtquelle 2 beleuchtet und das Bild auf das unter dem Träger 3 angeordnete Lineararray 8 projiziert. Wird in dieser Ausführungsform der Abstand zwischen dem Träger 3 und dem Array 8 möglichst klein gewählt, so kann auf die Verwendung von zusätzlichen Optiken verzichtet werden.

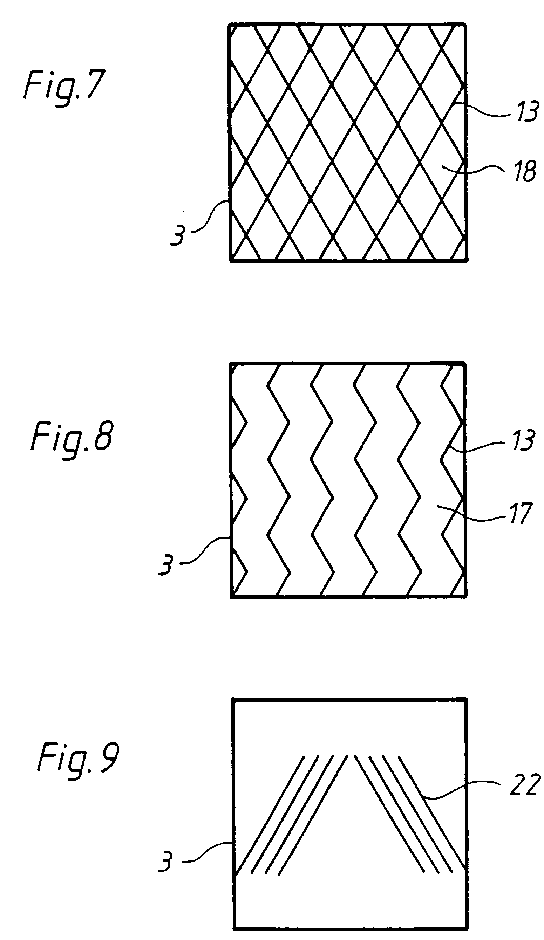

Die Figur 7 zeigt den Träger 3 mit einem darauf angeordneten Rautenmuster 18 aus einzelnen Winkeln 13. Analog zum Ausführungsbeispiel der Figur 2 können auch hier die einzelnen Winkel 13 in unterschiedlicher Strichstärke ausgeführt sein.

In der Figur 8 ist der Träger 3 mit einem darauf angeordneten Mäandemuster 17 aus einzelnen, aneinandergereihten Winkeln 13 dargestellt. In dieser Ausführungsform können die einzelnen Winkel 13 in unterschiedlicher Strichstärke und/oder in unterschiedlichem Abstand voneinander auf dem Träger 3 vorgesehen sein.

Die Figur 9 zeigt eine geometrische Figur mit unterbrochenen Einzelwinkeln. Diese Winkel 22 schränken die Funktion der geometrischen Figur nicht ein, sondern begrenzen lediglich den maximalen Meßbereich in X- oder Y-Richtung.

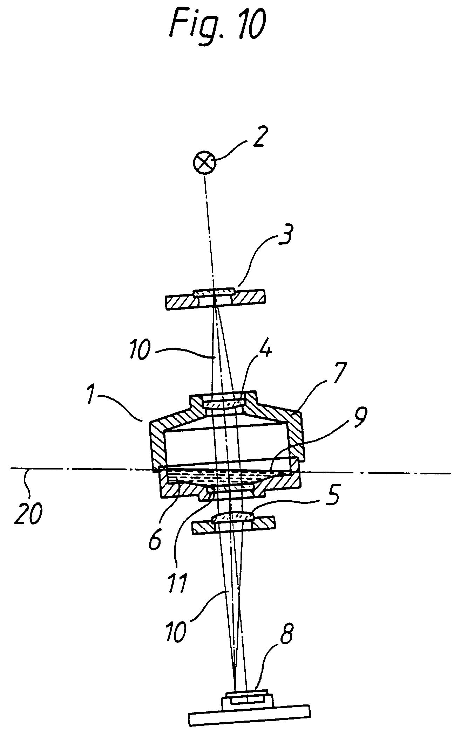

Die Figur 10 zeigt analog zur Figur 1 eine geneigte Meßanordnung in Durchlichtbeleuchtung. Der Flüssigkeitshorizont 9 richtet sich dabei unter Wirkung der Schwerkraft gegenüber dem tatsächlichen Horizont 20 aus und bildet zusammen mit der transparenten Abschlußplatte 11 einen optischen Keil, an dem das parallel verlaufende Beleuchtungsstrahlenbündel 10 gebrochen wird. Über die Optik 5 erfolgt die Abbildung der geometrischen Figur auf dem Lineararray 8.

Die Erfindung ist nicht auf geodätische Meßinstrumente beschränkt, sondern ist überall dort als separates Gerät oder auch in Kombination mit einem anderen Instrument zu verwenden, wo X-Y-Neigungen zu erfassen sind.

## Patentansprüche

1. Neigungsmesser zur Messung von Neigungen oder Neigungsänderungen in zwei senkrecht zueinander stehenden Richtungen, mit einer Lichtquelle, die einen Träger mit einer geometrischen Dreiecks-Figur beleuchtet und diese über einen neigungsempfindlichen Sensor auf einen Lineararray abbildet, wobei die Schenkel der Dreiecksfigur das Lineararray (8) an zwei Punkten schneiden, dadurch gekennzeichnet, daß der Sensor als neigungsempfindliches und strahlablenkendes Flüssigkeitsprisma (1) ausgebildet ist und die geometrische Figur mehrere hintereinander zu einem Fischgrätmuster (12) angeordnete Einzelwinkel (13) mit unterschiedlicher Strichdicke aufweist.

2. Neigungsmesser nach Anspruch 1, dadurch gekennzeichnet, daß das Flüssigkeitsprisma (1) transparentes Siliconöl aufweist.

3. Neigungsmesser nach Anspruch 1, dadurch gekennzeichnet, daß die Projektion im Durchlicht erfolgt.

4. Neigungsmesser nach Anspruch 1-3, dadurch gekennzeichnet, daß die Projektion über eine Totalreflektion am Horizont (9) der Flüssigkeit (6) erfolgt.

5. Neigungsmesser nach Anspruch 1, dadurch gekennzeichnet, daß die Einzelwinkel (13) der geometrischen Figur mit unterschiedlichen Abständen zueinander ausgebildet sind.

## Claims

1. Inclinometer for the measurement of inclinations or changes in inclination in two mutually perpendicular directions, with a light source which illuminates a carrier with a geometric triangular figure and images this by way of an inclination-sensitive sensor onto a linear array, wherein the limbs of the triangular figure intersect the linear array (8) at two points, characterised thereby, that the sensor is constructed as inclination-sensitive and beam-deflecting liquid prism (1) and the geometric figure displays several individual chevrons (13), which are of different line thickness and arranged one behind the other in a herringbone pattern (12).

2. Inclinometer according to claim 1, characterised thereby, that the liquid prism (1) comprises transparent silicone oil.

3. Inclinometer according to claim 1, characterised thereby, that the projection takes place in transmitted light.

4. Inclinometer according to claim 1 to 3, characterised thereby, that the projection takes place by way of a total reflection at the horizon (9) of the liquid (6).

5. Inclinometer according to claim 1, characterised thereby, that the individual chevrons (13) of the geometric figure are formed at different spacings one from the other.

## Revendications

1. Inclinomètre pour la mesure d'inclinaisons ou de variations d'inclinaison dans deux directions perpendiculaires l'une à l'autre, à l'aide d'une source de lumière qui éclaire un support avec une figure triangulaire géométrique et reproduit celle-ci sur une matrice linéaire par l'intermédiaire d'un détecteur sensible à des inclinaisons, les branches de la figure triangulaire intersectant la matrice linéaire (8) à deux points, caractérisé en ce que le détecteur est réalisé sous forme d'un prisme à liquide (1) sensible à des inclinaisons et déviant le faisceau, et la figure géométrique comprend plusieurs angles individuels (13) disposés successivement pour former un motif à chevron (12), avec des épaisseurs de traits différents.

2. Inclinomètre selon la revendication 1, caractérisé en ce que le prisme à liquide (1) comprend de l'huile de silicone transparente.

3. Inclinomètre selon la revendication 1, caractérisé en ce que la projection se fait dans de la lumière traversante.

4. Inclinomètre selon l'une des revendications 1 à 3, caractérisé en ce que la projection se fait par réflexion totale à l'horizon (9) du liquide (6).

5. Inclinomètre selon la revendication 1, caractérisé en ce que les angles individuels (13) de la figure géométrique sont réalisés à des distances différentes les uns des autres.

*Fig.1*

*Fig.2*

_Fig.3_

_Fig.4_

*Fig.5*

*Fig.6*

*Fig.7*

13

18

3

*Fig.8*

13

17

3

*Fig.9*

22

3

## Fig. 10